# EUROPEAN PATENT APPLICATION

(11) **EP 4 446 445 A1**
(43) Date of publication of application: **16.10.2024**
(21) Application number: 22903837.7
(22) Date of filing: 05.10.2022
(51) Int. Cl.: C22B 7/00, B01D 19/02, B09B 3/70, B09B 5/00, C22B 1/02, C22B 3/06, H01M 10/54

(54) **METAL LEACHING METHOD**

(30) Priority: 09.12.2021 JP 2021200261
(71) Applicant: JX Metals Circular Solutions Co., Ltd., Tokyo 105-8417 (JP)
(72) Inventor: YANAGAWA,Koki, Hitachi-shi, Ibaraki 317-0056 (JP)
(74) Representative: Arnold & Siedsma
(86) International application number: PCT/JP2022/037331
(87) International publication number: WO 2023/105903

(57) **Abstract**

A method for bringing battery powder resulting from lithium ion battery waste into contact with an acidic leaching solution 21 inside a leaching vessel 1 to leach metals contained in the battery powder into the acidic leach solution 21, wherein the leaching vessel 1 includes a porous member 2 disposed to cover a liquid surface 22 of the acidic leaching solution 21 stored therein at a position above the liquid surface 22, the method includes destroying froth Ba generated in the acidic leaching solution 21 by bringing them into contact with the porous member 2 during leaching of the metals inside the leaching vessel 1, and the porous member 2 has an opening of 12 mm or less.

## Description

### [Technical Field]

This specification discloses a method for leaching metals.

### [Background Art]

In recent years, the recovery of valuable metals from lithium ion battery waste discarded due to product life, manufacturing defects, or other reasons has been widely studied from the viewpoint of effective utilization of resources.

In order to recover valuable metals from lithium ion battery waste, for example, battery powder obtained through a heat treatment or other treatments is brought into contact with an acidic leaching solution to leach in the acidic leaching solution metals such as nickel, cobalt, manganese, aluminum and iron in the battery powder. This can provide a leached solution in which the metals are dissolved.

Subsequently, as described in Patent Literatures 1 to 3, solvent extraction or neutralization, or the like, is carried out to remove sequentially or simultaneously aluminum, iron, manganese and the like, among the metals dissolved in the leached solution. Valuable metals such as nickel and cobalt are then separated by solvent extraction and concentrated to recover them.

### [Citation List]

### [Patent Literature]

[PTL 1]
Japanese Patent Application Publication No. 2010-180439 A
[PTL 2]
U.S. Patent Application Publication No. 2011/0135547 A1
[PTL3]
Japanese Patent Application Publication No. 2014-162982 A

### [Summary of Invention]

### [Technical Problem]

In the treatment of lithium ion battery waste as described above, relatively large amounts of froth may be generated from the acid leaching solution when battery powder is brought into contact with the acidic leaching solution. Such a foaming phenomenon can interfere with the smooth operation of the step of leaching the metals in the battery powder into the acidic leaching solution.

This specification discloses a method for leaching metals that can effectively suppress foaming of an acidic leaching solution when leaching the metals in battery powder into the acidic leaching solution.

### [Solution to Problem]

The method for leaching metals disclosed in this specification is a method for bringing battery powder resulting from lithium ion battery waste into contact with an acidic leaching solution inside a leaching vessel to leach metals contained in the battery powder into the acidic leach solution, wherein the leaching vessel comprises a porous member disposed to cover a liquid surface of the acidic leaching solution stored therein at a position above the liquid surface, the method comprises destroying froth generated in the acidic leaching solution by bringing them into contact with the porous member during leaching of the metals inside the leaching vessel, and the porous member has an opening of 12 mm or less.

### [Advantageous Effects of Invention]

According to the method for leaching metals as described above, it is possible to effectively suppress foaming of an acidic leaching solution when leaching metals in battery powder into the acidic leaching solution.

### [Brief Description of Drawings]

[FIG. 1]

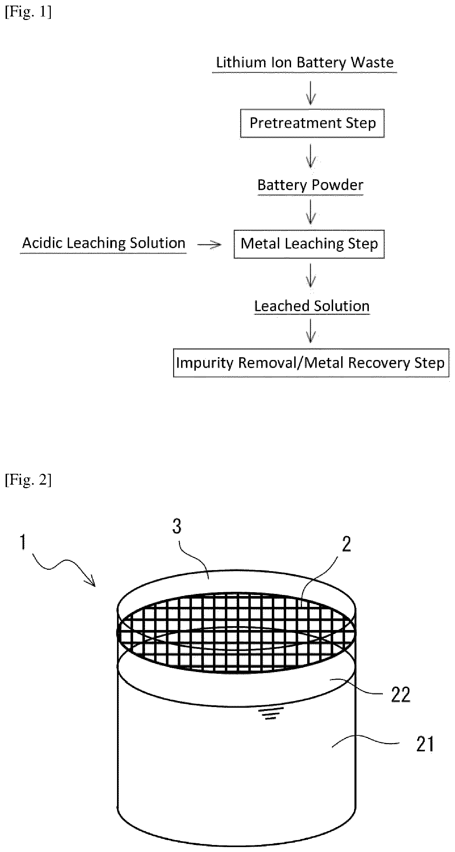

   FIG. 1 is a flowchart illustrating an example of a metal recovery process to which a method for leaching metals according to an embodiment can be applied.
[FIG. 2]
   FIG. 2 is a perspective view schematically showing an example of a leaching vessel that can be used in a method for leaching metals according to an embodiment.
[FIG. 3]

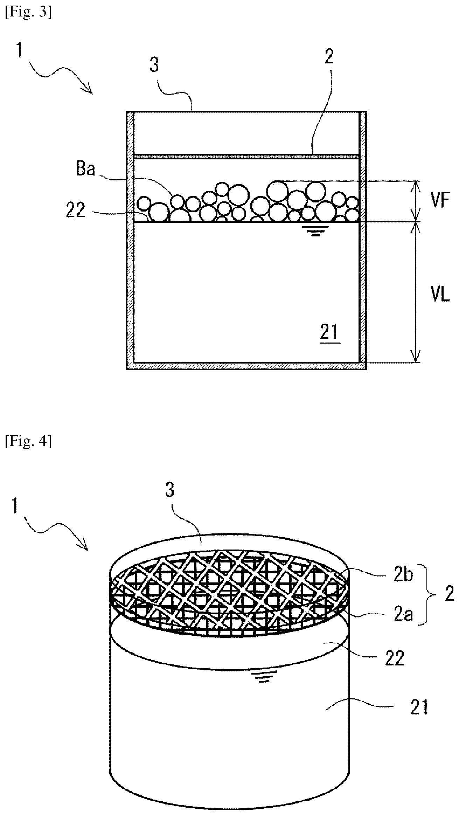

   FIG. 3 is a cross-sectional view of the leaching vessel of FIG. 2 along a depth direction.
[FIG. 4]
   FIG. 4 is a perspective view schematically showing another example of a leaching vessel.
[FIG. 5]

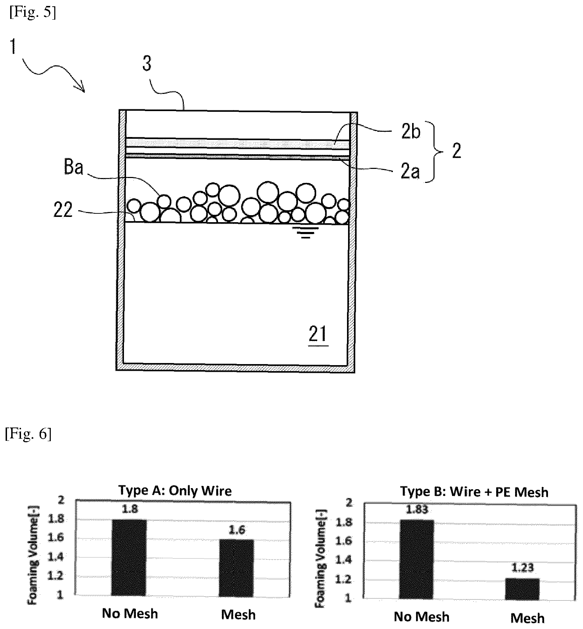

   FIG. 5 is a cross-sectional view of the leaching vessel of FIG. 4 along a depth direction.
[FIG. 6]
   FIG. 6 is a graph showing results of confirming an effect of a difference between openings of porous members on foaming in Examples.
[FIG. 7]

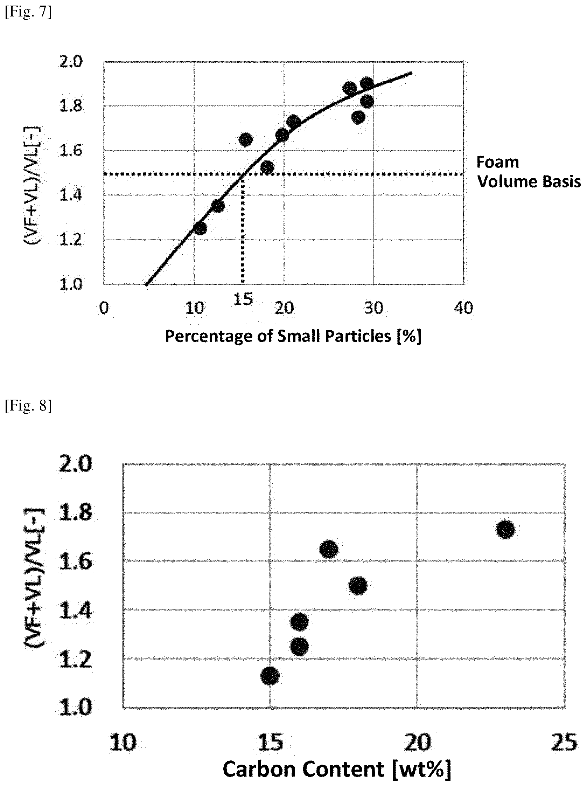

   FIG. 7 is a graph showing results of confirming an effect of percentages of small particles in battery powder on foaming in Examples.
[FIG. 8]
   FIG. 8 is a graph showing results of confirming an effect of carbon contents of battery powder on foaming in Examples.
[FIG. 9]

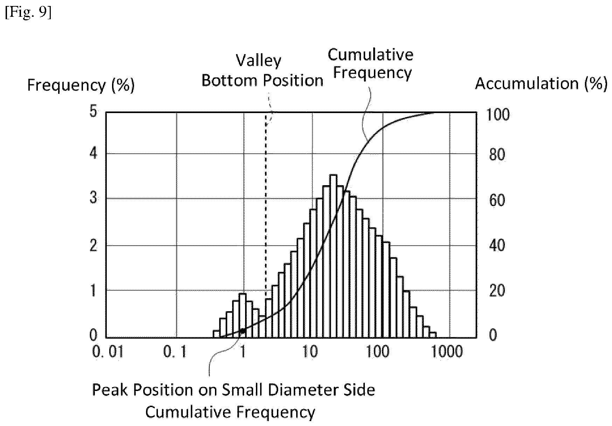

   FIG. 9 is a graph schematically showing an example of a particle size distribution graph of battery powder.

### [Description of Embodiments]

Embodiments of the method for leaching metals as described above will be described below in detail.

The method for leaching metals according to an embodiment is a method for bringing battery powder resulting from lithium ion battery waste into contact with an acidic leaching solution inside a leaching vessel to leach the metals contained in the battery powder into the acidic leaching solution.

The leaching vessel used has a porous member disposed at a position above a liquid surface of the acidic leaching solution stored therein so as to cover the liquid surface. When the metals in the battery powder is leached inside the leaching vessel, froth generated and floating in the acidic leaching solution are brought into contact with the porous member and destroyed. This allows the froth generated in the acidic leaching solution to be effectively eliminated during leaching of the metals.

Such a method for leaching metals can be used in the process of recovering certain metals such as valuable metals, from lithium ion battery waste. Here, the method for leaching metals is described as an example where it is applied to a metal leaching step in a metal recovery process for lithium ion battery waste as illustrated in FIG. 1. However, the method for leaching metals is not limited thereto, and it can be used in various processes including a step of leaching metals in battery powder resulting from lithium ion battery waste into an acidic leaching solution.

### (Lithium Ion Battery Waste)

Lithium ion battery waste of interest is vehicle lithium ion batteries or consumer electronics lithium ion batteries, which have been discarded due to battery product life, manufacturing failure, or other reasons. The vehicle lithium ion batteries include those contained in vehicle battery packs mounted on vehicles such as hybrid vehicles and electric vehicles. The consumer electronics lithium ion batteries include those used in various electronic devices such as mobile phones. Recovery of valuable metals such as cobalt, nickel and other valuable metals from such lithium ion battery waste is required from the viewpoint of effective utilization of resources.

The vehicle battery pack containing the vehicle lithium ion batteries generally includes metal cases forming housings around the cases, batteries housed inside the cases, each having a plurality of battery cells such as lithium ion batteries and other components. There are vehicle battery packs having various shapes, depending on the space constraints of the vehicles on which they are mounted. For example, there is a vehicle battery pack having a vertically long outer shape which is longer in one direction, such as a rectangular parallelepiped shape that is substantially rectangular in a plane view.

The lithium ion battery waste typically includes: a cathode material in which a cathode active material comprised of single metal oxides of one or more of lithium, nickel, cobalt and manganese or composite metal oxides two or more of them is applied and fixed onto an aluminum foil (a cathode substrate) via, for example, an organic binder such as polyvinylidene fluoride (PVDF); an anode material made of a carbon-based material; and an organic electrolytic solution such as ethylene carbonate or diethyl carbonate or other electrolytes. In addition, the lithium ion battery waste may contain copper, iron, and the like.

### (Pretreatment Step)

The pretreatment step may include a heat treatment, a crushing treatment and a sieving treatment in this order or in random order, but at least one of them may be omitted. The lithium ion battery waste is subjected to the pretreatment step to obtain the battery powder. As used herein, the battery powder refers to powder obtained by subjecting the lithium ion battery waste to any pretreatment step to separate and concentrate cathode material components. The battery powder may be obtained as powder by subjecting the lithium ion battery waste to the crushing treatment and the sieving treatment, with or without the heat treatment, thereby concentrating the cathode material components.

Here, an example of a case where the heat treatment is performed will be described below in detail. As an example of a case where the heat treatment is not performed, there is the following technique or the like as an example: the residual electricity of the lithium ion battery waste is first discharged, and then crushed and sieved, and the resulting cathode material with the aluminum foil is then treated with a solvent to dissolve the binder, and the cathode electrode material components are separated from the aluminum foil and recovered.

When the heat treatment is performed, the heat treatment involves heating the lithium ion battery waste. It should be noted that, in the case of lithium ion battery waste from the vehicle battery packs, it is difficult to disassemble them because they have robust structures protected by metal cases, and disassembling them may have a risk of causing electric shock due to residual voltage. Therefore, the lithium ion battery waste may be subjected to the heat treatment without disassembling it, while maintaining the structure in which the batteries and the like are surrounded by the cases.

The heat treatment of the lithium ion battery waste may be performed in an inert atmosphere or an air atmosphere. A part of the heat treatment may be performed in one of the inert atmosphere and the air atmosphere, and the remaining of the heat treatment may be performed in the other of the inert atmosphere and the air atmosphere. For example, the heat treatment may be first performed in an inert atmosphere, and the atmosphere may be then changed to perform the heat treatment in the air atmosphere. The atmosphere for this heat treatment can be appropriately selected in view of various factors such as characteristics of each atmosphere and working efficiency, which will be described later.

The heat treatment in the inert atmosphere suppresses explosive combustion of organic electrolytes and other substances that may be contained in the lithium ion battery waste, leading to easy control of a temperature inside a heat treatment furnace, and also suppresses the formation of nickel oxide and cobalt oxide and promotes the formation of cobalt and nickel which are metals easily dissolved in an acid, leading to increased recovery rates of valuable metals. If the temperature control of the heat treatment furnace becomes difficult, aluminum foil and other aluminum materials may melt, and valuable metals such as cobalt and nickel may be incorporated into the molten aluminum, leading to solidification. In this case, there is concern that the valuable metals will be removed together with the aluminum in a sieving treatment described below, resulting in decreased recovery rates of the valuable metals.

If the temperature in the heat treatment furnace can be controlled, the formation of powdered lithium aluminate due to the reaction of aluminum with lithium oxide can be suppressed. It should be noted that the formation of lithium aluminate promoted at high temperature and under high oxygen partial pressure leads to a decrease in the lithium leaching rate when lithium is leached in the metal leaching step as described below, because lithium aluminate has lower solubility in water than lithium carbonate. Further, aluminum foil that has not reacted into lithium aluminate can be easily separated by a sieving treatment. On the other hand, if lithium aluminate is formed, the aluminum foil becomes brittle and is easily mixed into the battery powder in the sieving treatment.

Specifically, the heat treatment in the inert atmosphere can be performed in an atmosphere containing at least one selected from the group consisting of nitrogen, carbon dioxide and water vapor. Among them, an atmosphere mainly containing nitrogen is preferable. The heat treatment may be performed while allowing such an inert gas to flow. Oxygen may be contained in a trace amount to some extent, and an oxygen partial pressure during heat treatment can be maintained in a range of 0 atm to 4 × 10⁻² atm as measured by a zirconia-type oxygen concentration meter. When the inert gas is introduced into a heat treatment furnace, it is preferable that the oxygen concentration of the inert gas may be 0.05% by volume to 4.00% by volume, and the flow rate in the heat treatment furnace may be 6 m³/hr to 60 m³/hr. Also here, the lithium ion battery waste can be heated to reach a temperature of 400°C to 800°C and maintain it at this temperature.

The heat treatment in the air atmosphere can suppress a foaming phenomenon in acid leaching in the metal leaching step. Substances resulting from incomplete thermal decomposition of the heat treatment in the inert atmosphere can cause the foaming during acid leaching.

The heat treatment in the air atmosphere is preferable because any adjustment of the atmosphere becomes unnecessary to lead to a simple process. At this time, the lithium ion battery waste can be heated to reach a temperature of 400°C to 800°C and maintain it at this temperature.

For the heat treatment, for example, an atmospheric electric furnace or atmospheric muffle furnace can be used in the case of a batch type, or a roller hearth kiln, mesh belt kiln, pusher kiln or the like can be used in the case of a continuous type. Among them, the roller hearth kiln and pusher kiln are preferred because they are suitable for large-scale processing.

The crushing treatment is carried out, for example, in order to remove the batteries from the cases of the vehicle battery packs in the lithium ion battery waste and destroy the housings of the batteries, and also selectively separate the cathode active materials from the aluminum foils coated with the cathode active materials. Here, various known devices or equipment can be used, and specific examples thereof include an impact-type crusher capable of crushing the cases and the batteries by applying an impact while cutting them, such as a sample mill, a hammer mill, a pin mill, a wing mill, a tornado mill, a hammer crusher and the like. A screen can be installed at the outlet of the crusher, so that the batteries are discharged from the crusher through the screen when the batteries are crushed to have a size that can pass through the screen.

After the crushing, if necessary, the crushed batteries are roughly pulverized or powdered into powder, and then sieved using a sieve having an appropriate mesh size. As a result, aluminum, copper and the like can remain on the sieve, for example, and battery powder containing lithium, cobalt, nickel and the like from which aluminum, copper, and the like have been removed to some extent can be obtained under the sieve.

As described below, when carbon is contained in the battery powder, for example in the form of relatively fine carbon powder derived from anode materials, the foaming during the acid leaching in the metal leaching step tends to be more remarkable. This tendency does not depend on the details of the pretreatment step, such as the presence or absence of the heat treatment, as long as carbon is present in the battery powder. In this embodiment, any battery powder that does not contain carbon and any battery powder that does contain carbon can be targeted, and in both cases, the foaming during the acid leaching can be effectively suppressed.

### (Metal Leaching Step)

To leach the metals in the battery powder as described above, the battery powder can optionally be brought into contact with a liquid such as water to leach lithium, and the resulting residue can be then brought into contact with an acidic leaching solution to leach other metals into the acidic leaching solution. The leaching of lithium provides a lithium dissolved solution, and the acid leaching provides a leached solution in which metals such as cobalt, nickel, manganese, aluminum, copper, and iron are dissolved.

When the lithium is leached prior to the leaching with the acidic leaching solution, water may be brought into contact with the battery powder, and specifically, tap water, industrial water, distilled water, purified water, ion-exchanged water, pure water, ultrapure water, and the like can be used. In addition, a liquid temperature at the time of contact of the battery powder with the liquid can be 10°C to 60°C.

The lithium dissolved solution obtained by the leaching of lithium can be subjected to treatments such as solvent extraction, neutralization, and carbonation, thereby recovering lithium in the lithium-dissolved solution as lithium carbonate. The lithium carbonate thus obtained may optionally be purified to reduce impurity grade.

The battery powder as the residue or the like after the above lithium leaching is brought into contact with the acidic leaching solution to leach metals such as cobalt and nickel contained therein into the acidic leaching solution. During the acid leaching using the acidic leaching solution, the froth may be generated from the acidic leaching solution, and such froth inhibit any smooth acid leaching. To address this, the present embodiment uses a leaching vessel 1 as illustrated in FIGS. 2 and 3.

In the illustrated leaching vessel 1, a porous member 2 in the form of sheet, plate or the like, which is provided with multiple hole portions each penetrating in the thickness direction, is disposed to cover a liquid surface 22 above a position where the liquid surface 22 would exist if an acidic leaching solution 21 was stored therein. As a result, when the battery powder is brought into contact with the acidic leaching solution 21, as shown in FIG. 3, froth Ba that are generated in the acidic leaching solution 21 and float on the liquid surface 22 are brought into contact with the porous member 2 and destroyed. Consequently, the froth Ba are prevented from leaking out of an opening 3 on an upper side of the leaching vessel 1, thus allowing the acid leaching to be performed smoothly.

In this embodiment, the froth Ba can be effectively destroyed by the porous member 2, so that the acid leaching can smoothly be performed even for the battery powder prepared under conditions that tend to generate the froth Ba during the acid leaching (such as the heat treatment conditions as described above). For example, the battery powder that has been subjected to the heat treatment only in the inert atmosphere or that has been subjected to the heat treatment in the air atmosphere but for a relatively short time tends to generate relatively large amounts of the froth Ba during the acid leaching. Even if such battery powder is subjected to the acid leaching, the froth Ba are suppressed by using the porous member 2. Therefore, according to this embodiment, it is possible to set appropriate conditions for the heat treatment without strictly considering the degree of generation of froth Ba during the acid leaching.

The porous member 2 is preferably disposed to cover the entire liquid surface 22 as shown in the figure, but some parts of the liquid surface 22 may not be covered by the porous member 2. The position of the porous member 2 in the height direction from the liquid surface 22 of the acidic leaching solution 21 can be set depending on various conditions between the opening 3 of the leaching vessel 1 and the liquid surface 22. For example, as shown in FIG. 3, the position of the porous member 2 in the height direction can be determined so that VT, expressed by the equation VT = (VF + VL) / VL in which VL is a volume of the acidic leaching solution 21 containing the battery powder and VF is a volume of the froth Ba on the liquid surface 22 is suppressed to be less than 2.0 or even less than 1.5 from. The volume VF of the froth Ba on the liquid surface 22 can be calculated by multiplying a height from the liquid surface 22 to the top of the froth Ba at the uppermost side by a transverse cross-sectional area orthogonal to the height direction at the point where the froth Ba exist inside the leaching vessel 1. If the transverse cross-sectional area orthogonal to the height direction of the leaching vessel 1 is constant, the above equation can be used by replacing the above volume VL and volume VF with the heights, respectively. It should be noted that the height direction as used herein is a direction parallel to the depth direction of the leaching vessel 1 and corresponds to the up-down direction in FIG. 3.

The porous member 2 includes, specifically, a mesh member in which wires or the like are woven and multiple hole portions are provided in the gaps between the wires or the like, as well as a perforated metal in which multiple hole portions are formed by punching out a plate material. The opening of each hole portion (mesh) of the porous member 2 such as the mesh member is preferably 12 mm or less, or even less than 10 mm, or even 5 mm or less, or especially 1 mm or less. If the opening is too large, there is concern that the froth Ba may pass through the mesh and leak out of the opening 3 of the leaching vessel 1. When each hole portion of the porous member 2 has a quadrangular shape such as a square or rectangle in a plane view, the opening means the length of one side of the inner dimension or the length of the long side of the inner dimension. Alternatively, when each hole portion of the porous member 2 is a polygonal shape other than the quadrangular shape in a plane view, the opening is the distance between the most distant points on the contour line of the hole portion. Alternatively, when each hole portion of the porous member 2 is a perfect circle, oval, ellipse, ellipse or other circular shape in a plane view, the opening is the diameter or the length of the major axis of the hole portion.

Single porous member 2 may be provided, or two or more porous members 2 may be provided. For example, as shown in FIGS. 4 and 5, in addition to the mesh member 2a above the liquid surface 22, a support member 2b is provided on the further upper side of the mesh member 2a as the porous member 2. The support member 2b functions to support the mesh member 2a from behind (upper side), which may deform or bend due to contact with the froth Ba from the liquid surface 22 on the lower side, and it has many hole portions with dimensions larger than the mesh of the mesh member 2a in a plane view. This allows the mesh member 2a to be effectively supported by the support member 2b while destroying the froth Ba. The hole portions in the support member 2b may have larger openings than the mesh openings of the mesh member 2a.

By the way, the acidic leaching solution 21 may contain, for example, 50 g/L or more, typically 60 g/L to 400 g/L, of sulfuric acid, although other acids may be used. When the acidic leaching solution 21 containing sulfuric acid, especially at a relatively high concentration as described above, is brought into contact with the battery powder, the generation of froth Ba becomes more remarkable, so that it is effective to use the leaching vessel 1 having the porous member 2 as described above.

In addition, the methods of bringing the battery powder into contact with the acidic leaching solution 21 containing sulfuric acid include bringing the battery powder into contact with a sulfuric acid solution of concentrated or dilute sulfuric acid, and adding concentrated sulfuric acid to a slurry in which the battery powder is dispersed in water or other liquid, and the like. The generation of the froth Ba as described above is thought to be mainly caused by a hydrogen gas produced in the leaching reaction. Therefore, it is assumed that when the battery powder is brought into contact with the sulfuric acid solution of dilute sulfuric acid, the generation rate of the hydrogen gas is relatively slow and the degree of foaming is lower. On the other hand, a lower sulfuric acid concentration slows the leaching rate and reduces an efficiency of the metal leaching step. Therefore, from the perspective of improving the efficiency of the metal leaching step, it is desirable to add the battery powder to the sulfuric acid solution having the higher concentration (e.g., a sulfuric acid concentration of 50 g/L or higher) as described above, or to add concentrated sulfuric acid (a sulfuric acid concentration of 90% by mass or higher (e.g., 98% by mass)) to the slurry containing the battery powder. In this embodiment, since the foaming can be suppressed by the porous member 2, the battery powder can be added to the sulfuric acid solution of concentrated sulfuric acid, or sulfuric acid can be added to the slurry containing the battery powder to increase the efficiency of the metal leaching step.

It was newly found that when the carbon content in the battery powder is higher than 17% by mass, e.g., 17 to 50% by mass, larger number of froth Ba are generated when the battery powder is in contact with the acidic leaching solution 21. Therefore, when the battery powder having such a higher carbon content is brought into contact with the acidic leaching solution 21, the defoaming by the porous member 2 in the leaching vessel 1 functions even more effectively.

Also, it was newly found that the particle size distribution of the battery powder affects the generation of the froth Ba during the acid leaching. Specifically, when the particle size of the battery powder is measured with a laser diffraction and scattering particle size distribution measuring device (such as MT3000II manufactured by MicrotracBEL Corp.) to obtain a particle size distribution graph on a volume basis, if multiple peaks appear on the particle size distribution graph, the Ba froth during acid leaching will increase when the area ratio of the peak located on the smallest diameter side is relatively high, such as 15% or more, for example 15% to 40%. Therefore, it is effective to apply this embodiment to the battery powder having such a larger percentage of small particles. The area ratio of the peak located on the smallest diameter side can be determined by doubling the cumulative frequency at the peak position on the particle size distribution graph. Here, the cumulative frequency at the peak position as described above means the cumulative value of the frequency from the smallest diameter side of the peak located on the smallest diameter side to that peak on the particle size distribution graph as shown in FIG. 9. The peak position is defined as the particle size at which the cumulative frequency is 50% when assuming that the sum of the frequencies from the smallest particle size to the largest particle size of the mountain for determining the peak position is 100% (i.e., when the mountain is assumed to be one particle size distribution) among the multiple peaks. The multiple mountains having multiple peaks are divided at the valley bottom positions where the valleys between those mountains have the lowest frequency. In the example shown in FIG. 9, the two mountains are divided at the valley bottom position indicated by the dashed line in the same figure. The distance between the particle sizes on the horizontal axis in the particle size distribution graph can be set based on the particle size classification of the Tyler standard sieve (mesh standard) in accordance with JIS Z 8801-1.

The pH of the acidic leaching solution is preferably 0.0 to 4.0 during the acid leaching, and it may be 0.5 to 2.0 after the acid leaching is completed. The oxidation-reduction potential (ORP value, based on silver/silver chloride potential) may be, for example, -250 mV to 0 mV immediately after the acid leaching, and it may be about 300 mV in the leached solution after solid-liquid separation. During the acid leaching, the acid leaching solution can be agitated at, for example, 300 rpm to 400 rpm using an agitator if necessary. The liquid temperature during the acid leaching may be 60°C to 80°C, for example.

In the acid leaching of the metal leaching step, only one leaching stage may be performed, or multiple leaching stages may be repeated multiple times. When the multiple leaching stages are performed, each leaching stage includes a first leaching stage of leaching the battery powder with the acidic leaching solution and separating the leached residue to obtain a leached solution, and a second leaching stage of leaching the leached residue from the first leaching stage with the acidic leaching solution to obtain a leached solution. The leached solution obtained in the final leaching stage (the second leaching stage if there are two leaching stages: the first leaching stage and the second leaching stage), among those leaching stages, is used by containing it in the acidic leaching solution of the next first leaching stage. Also, the leached solution obtained in each leaching stage other than the final leaching stage (the first leaching stage if there are two leaching stages: first leaching stage and second leaching stage) is sent to the next step (impurity removal and metal recovery step). When the multiple leaching stages are repeated in such a way, many of the metals (such as copper) for which the leaching is desired to be suppressed can be separated as a leached residue without leaching those metals, while increasing the leaching rates of the metals to be leached (such as cobalt and/or nickel) in the battery powder.

### (Impurity Removal and Metal Recovery Step)

The leached solution as described above may be subjected to a step of recovering metals such as cobalt and nickel after impurities are removed. For example, the removal of impurities includes removal of some of aluminum and iron by neutralization, and removal of the remaining aluminum and manganese by solvent extraction, and the like. In the recovery of the metals, cobalt and nickel can be recovered by sequentially extracting cobalt and nickel by solvent extraction and stripping them.

### [Examples]

Next, the method for leaching metals as described above was experimentally carried out and the effects thereof were confirmed, as described below. However, the descriptions herein are merely for illustrative and are not intended to be limited.

### (Confirmation of Effectiveness of Porous Member)

Battery powders A to D were obtained by heat treatments of lithium ion battery waste. The battery powders A to C were obtained by the heat treatment in a nitrogen atmosphere followed by the heat treatment in an air atmosphere, and the battery powder D was obtained by the heat treatment in a nitrogen atmosphere. Each of the battery powders A to C was prepared under conditions where at least one of the temperature and the time of the heat treatment in the air atmosphere was different.

For each of the battery powders A to D, sulfuric acid was added to a slurry having the battery powder dispersed in water, and the battery powder was brought into contact with an acidic leaching solution containing sulfuric acid to leach the metals in the battery powder for 2 hours. The liquid temperature during the leaching was 65°C to 70°C.

In Comparative Example, a leaching vessel having no porous member was used. As a result, the VT expressed by the above-mentioned equation: VT = (VF + VL) / VL reached 2.0 (the opening on the upper side of the leaching vessel) for all the battery powders A to D, and the foaming could not be suppressed.

On the other hand, in Examples, the leaching vessel having the mesh member and the support member as the porous member was used, as shown in FIGS. 4 and 5. The mesh member was a flat-woven mesh net made of PE (polyethylene) with a mesh opening of 1 mm, and the support member was a wire mesh with a mesh opening of 10 mm. The mesh member was placed at the position VT = 1.5, and the froth disappeared when they were in contact with the mesh member, so that the foaming was effectively suppressed for all the battery powders A to D.

### (Confirmation of Effect of Difference between Openings of Porous Members on Foaming)

The lithium ion battery waste was subjected to the heat treatment in the nitrogen atmosphere, followed by the heat treatment in the air atmosphere, and it was then crushed in an orient mill. The resulting battery powder was subjected to water leaching to leach lithium.

To the battery powder as the residue after the above water leaching, the acid leaching was subjected for cases where the leaching vessel was provided with only a wire mesh having a mesh opening of 10 mm as the porous member (Type A, Mesh) and where the leaching vessel was not provided with the wire mesh (Type A, No Mesh) as shown in FIGS. 2 and 3, as well as cases where the leaching vessel was provided with a PE mesh having a mesh opening of 1 mm in addition to the above wire mesh (Type B, Mesh) and where the leaching vessel was not provided with both the metal mesh and the PE mesh (Type B, No Mesh), as shown in FIGS. 4 and 5. In all cases where the leaching vessels were used, the liquid temperature was 70°C, the sulfuric acid concentration of the acidic leaching solution was 270 g/L, the pulp density (P.D.) was 146.8 g/L, and the volume of the acidic leaching solution was 1000 mL. The pulp density refers to the ratio of the dry weight (g) of the battery powder to the volume (L) of the acidic leaching solution to be brought into contact with the battery powder.

The results are graphically shown in FIG. 6. The Foaming Volume on the vertical axis of the graph in FIG. 6 corresponds to the VT in the equation: VT = (VF + VL) / VL. As shown in FIG. 6, it is found that the foaming was suppressed in both Type A and Type B by providing the porous member. This can indicate that the froth generated during the acid leaching can be maintained at a certain height by providing the porous member. This would be because the froth are eliminated by the balance between the surface tension of the froth generated and the surface tension generated by the opening of the porous member. As an ancillary effect, the froth held down by the porous member coarsen each other and change into froth that are relatively easy to be destroyed due to reduced surface tension, which is also effective in suppressing the foaming. In "Mesh" of the Type A and Type B, the use of the porous member having the predetermined opening in both cases results in the action and effects by this mechanism. In particular, when both the wire mesh and the PE mesh were provided, as in the case of Type B "Mesh", the effect of suppressing the foaming was more effective.

### (Confirmation of Effect of Percentages of Small Particles in Battery Powder on Foaming)

The lithium ion battery waste was subjected to the heat treatment under the predetermined conditions to prepare several types of battery powder, which had different percentages of small particles as measured by the method as described above. Each battery powder was subjected to acid leaching. The VT was calculated from the volume VL of the acidic leaching solution and the volume VF of the froth generated in the acidic leaching solution based on the equation: VT = (VF + VL) / VL. The results are graphically shown in FIG. 7.

It is found from FIG. 7 that there is a positive correlation between the volume of froth generated in the acidic leaching solution and the percentage of small particles, and that when the percentage of small particles is 15% or more, the number of froth increases and the VT becomes larger, which is 1.5 or more. Thus, even if the acid leaching is performed on the battery powder having the relatively high percentage of small particles, the use of the porous material as described above suppresses the foaming and effectively reduces the increase in the VT.

### (Confirmation of Effect of Carbon Contents of Battery Powder on Foaming)

Several types of battery powder having different carbon contents obtained from the lithium ion battery waste were prepared. Each of these battery powders was subjected to the acid leaching. In this case, the VT was calculated from the volume VL of the acidic leaching solution and the volume VF of the froth generated in the acidic leaching solution based on the equation: VT = (VF + VL) / VL. The results are graphically shown in FIG. 8.

It is found from FIG. 8 that the volume of froth generated in the acidic leaching solution is substantially proportional to the carbon content of the battery powder. When the carbon content is 17% by mass or more, the number of froth increases and the VT becomes larger, which is 1.5 or more. In contrast, the use of the porous material allows the increase in froth and VT even if the acid leaching is performed on the battery powder having the relatively high carbon content.

As described above, it was found that the method for leaching metals as described above could effectively suppress the foaming of the acidic leaching solution. The effect of the present invention can be obtained not only when the porous member (e.g., the mesh member) is provided over the entire foaming area of the liquid surface in the leaching vessel, but also when the porous member is provided over a portion of the foaming area.

### [Description of Reference Numerals]

1 leaching vessel
2 porous member
2a net member
2b support member
3 opening
21 acidic leaching solution
22 liquid surface
Ba froth
VL volume of acidic leaching solution
VF volume of froth

## Claims

1. A method for bringing battery powder resulting from lithium ion battery waste into contact with an acidic leaching solution inside a leaching vessel to leach metals contained in the battery powder into the acidic leach solution,
wherein the leaching vessel comprises a porous member disposed to cover a liquid surface of the acidic leaching solution stored therein at a position above the liquid surface,
the method comprises destroying froth generated in the acidic leaching solution by bringing them into contact with the porous member during leaching of the metals inside the leaching vessel, and
the porous member has an opening of 12 mm or less.

2. The method according to claim 1, wherein the porous member has an opening of less than 10 mm.

3. The method according to claim 1, wherein the porous member comprises a mesh member.

4. The method according to claim 3, wherein the porous member further comprises a support member having hole portions with larger openings than those of the mesh member, the support member supporting the mesh member.

5. The method according to any one of claims 1 to 4, wherein the acidic leaching solution comprises sulfuric acid.

6. The method according to claim 5, wherein the acidic leaching solution has a sulfuric acid concentration of 50 g/L or more.

7. The method according to claim 5 or 6, wherein the battery powder is added to an aqueous sulfuric acid solution and the battery powder is brought into contact with the acidic leaching solution.

8. The method according to claim 5 or 6, wherein 90% by mass or more of sulfuric acid is added to a slurry comprising the battery powder, and the battery powder is brought into contact with the acidic leaching solution.

9. The method according to any one of claims 1 to 8, wherein the battery powder comprises 17% by mass or more of carbon.

10. The method according to any one of claims 1 to 9, wherein a peak located on the smallest diameter side in a particle size distribution graph of the battery powder has an area ratio of 15% or more.

11. The method according to any one of claims 1 to 10, wherein the battery powder used is a battery powder subjected to a heat treatment at least partially in an inert atmosphere.

12. The method according to claim 11, wherein the battery powder used is a battery powder subjected to a heat treatment in an inert atmosphere, followed by a heat treatment in an air atmosphere.
